# EUROPÄISCHE PATENTSCHRIFT

(11) **EP 1 660 357 B1**
(45) Veröffentlichungstag und Bekanntmachung des Hinweises auf die Patenterteilung: **25.04.2007**
(21) Anmeldenummer: 04786179.4
(22) Anmeldetag: 26.08.2004
(51) Int. Cl.: B60R 21/34

(54) **SICHERHEITSEINRICHTUNG AN EINEM KRAFTFAHRZEUG ZUM SCHUTZ VON FUSSGÄNGERN UND RADFAHRERN**
MOTOR VEHICLE SAFETY DEVICE FOR PROTECTING PEDESTRIANS AND CYCLISTS
DISPOSITIF DE SECURITE SUR UN VEHICULE A MOTEUR, DESTINE A LA PROTECTION DES PIETONS ET DES CYCLISTES

(30) Priorität: 03.09.2003 DE 10341368
(43) Veröffentlichungstag der Anmeldung: 31.05.2006
(73) Patentinhaber: Takata-Petri AG, 63743 Aschaffenburg (DE)
(72) Erfinder: KALLISKE, Ingo, 14469 Potsdam (DE); LUBE, Thomas, 12589 Berlin (DE); SCHMIDT, Oliver, 10965 Berlin (DE)
(74) Vertreter: Baumgärtel, Gunnar
(86) Internationale Anmeldenummer: PCT/DE2004/001895
(87) Internationale Veröffentlichungsnummer: WO 2005/023605

(56) Entgegenhaltungen:
- EP-A- 1 350 692
- EP-A- 1 479 574
- DE-A- 10 316 828
- DE-U- 20 119 579

## Beschreibung

Die Erfindung betrifft eine Sicherheitseinrichtung an einem Kraftfahrzeug zum Schutz von Fußgängern und Radfahrern nach dem Oberbegriff des Anspruchs 1.

Neben anderen Sicherheitseinrichtungen zum Schutz von Fußgängern und Radfahrern (EP 0967 128 A2, DE 101 02 597 A1, DE 100 14 832 A1) ist ein Kraftfahrzeug-Airbagsystem mit Airbags bekannt (EP 1 176 062 A2), die den Bereich der A-Säulen des Kraftfahrzeugs im Falle eines Unfalls mit einem Fußgänger oder Radfahrer abdecken. Mittels dieser Airbags soll insbesondere der Aufprall des Kopfes auf die A-Säule gemildert werden. Diese Airbags überdecken nur einen geringen Teil der Windschutzscheibe, um die Sicht des Fahrers nicht zu behindern, und sind deshalb schmal und wegen des kleinen Volumens instabil. Dadurch ergibt sich der Nachteil, daß diese Airbags bei einem schrägen Aufprall einer Person von dieser zur Seite geschoben werden können, so daß die Person gegen KFZ-Teile, insbesondere gegen die A-Säule, prallt und der beabsichtigte Schutz nicht eintreten kann.

Aus der gattungsbildenden DE 201 19 579 U1 ist eine Sicherheitsvorrichtung für Fußgänger mit einem unterhalb der Motorhaube angeordneten Airbag bekannt, der im entfalteten Zustand außenseitig die Windschutzscheibe eines Fahrzeugs im Bereich des unteren Randes und im Bereich der A-Säulen abdeckt. Mittels an den A-Säulen angeordneten Führungseinrichtungen werden die vor den A-Säulen entfalteten Airbagabschnitte fixiert, so dass sich der Airbag definiert ausbreiten kann.

Der Erfindung liegt deshalb die Aufgabe zugrunde, bei einer Sicherheitseinrichtung, die dem Fahrer auch nach dem Aufprall eine gute Sicht gewährt, das Aufprallen eines Fußgängers oder Radfahrers auf die A-Säule und angrenzende Teile des Kraftfahrzeugs auch bei einem schrägen Aufprall zu verhindern.

Erfindungsgemäß wird das gemäß den Merkmalen des Anspruchs 1 erreicht.

Bei einer Sicherheitseinrichtung an einem Kraftfahrzeug zum Schutz von Fußgängern und Radfahrern, mit mindestens einem unter der Motorhaube angeordneten und mit mindestens einem Gasgenerator verbundenen Airbag, der sich zum Schutz eines aufprallenden Fußgängers oder Radfahrers auf das Fahrzeug entfaltet und dabei zunächst die Motorhaube zumindest am Ort der Entfaltung des Airbags vom Kraftfahrzeug soweit abhebt, daß sich der Airbag in einer zweiten Phase nach außen entfalten kann, weist der Airbag erfindungsgemäß im entfalteten Zustand unterhalb der Motorhaube zwei Abschnitte bzw. Kammern im Bereich der Scharniere der Motorhaube auf. Der Airbag erstreckt sich oberhalb der Motorhaube über die gesamte Breite des Kraftfahrzeuges vor dem unteren Bereich der Windschutzscheibe und den A-Säulen des Kraftfahrzeugs und die seitlichen, insbesondere die A-Säulen abdeckenden Enden des Airbags weisen nach dessen Entfaltung nach oben und sind zusätzlich fixiert. Der entfaltete Airbag weist also die Form eines U auf.

Durch die Minimierung der Verschiebung der nach oben weisenden Enden, die die an die Motorhaube angrenzenden steifen Bereiche des Fahrzeuges abdecken, ergibt sich ein hohes und zuverlässiges Schutzpotential. Die zusätzliche Fixierung der nach oben weisenden Enden gewährleistet den Schutz vor dem Aufprall insbesondere auf die A-Säulen auch bei einem schrägen Aufprall, z.B. von der Scheibenmitte aus. Durch das großflächige Anheben der Motorhaube im Scharnierbereich werden die Kräfte günstig eingeleitet, was zu geringeren Verformungen der Motorhaube und damit zur Schwingungsreduktion führt.

Die Fixierung der seitlichen Enden kann auf unterschiedliche Weise erfolgen.

So kann als Mittel zur Fixierung der seitlichen Enden des Airbags mindestens ein Fangband oder ein schlauchförmiger Airbag vorgesehen sein. Dabei ist in einer Ausführungsform vorgesehen, daß die seitlichen Enden des Airbags durch ein Fangband oder einen schlauchartigen Airbag miteinander verbunden sind. In einer weiteren Ausführungsform ist vorgesehen, daß die seitlichen Enden des Airbags durch über Kreuz verlaufende Fangbänder oder schlauchartige Airbags mit dem unteren Bereich des auf der gegenüberliegenden Fahrzeugseite liegenden Airbagabschnitts verbunden sind.

In einer dritten Ausführungsform ist vorgesehen, daß die seitlichen Enden des Airbags durch Fangbänder oder schlauchartige Airbags fixiert sind, die mit ihrem anderen Ende am Kraftfahrzeug befestigt sind, z.B. mit dem mittleren Abschnitt eines unter der Motorhaube angeordneten Modulgehäuses verbunden sind.

In einer weiteren Ausführungsform ist vorgesehen, daß jedes seitliche Ende des Airbags durch zwei Fangbänder oder zwei schlauchartige Airbags fixiert ist, die von der Außenseite und der Innenseite des jeweiligen seitlichen Endes ausgehen.

Eine Stabilisierung der seitlichen Enden ist auch dadurch möglich, daß in diesem Bereich Verstärkungen des Airbags vorgesehen sind. Als Verstärkung kann mindestens eine Naht vorgesehen sein. Als Verstärkung kann aber auch mindestens ein transparenter Airbag vorgesehen sein. In einer Ausführungsform ist mindestens ein transparenter Verstärkungs-Airbag zwischen den seitlichen Enden angeordnet. In einer weiteren Ausführungsform verläuft von jedem seitlichen Ende mindestens eine durchsichtige Gewebeeinlage in den mittleren Bereich des Airbags.

Eine weitere Möglichkeit zur Stützung der seitlichen Enden des Airbags besteht darin, daß im Bereich der A-Säulen ein mit dem Airbag verbundenes Führungssystem vorgesehen ist, mit dessen Hilfe die seitlichen Enden des Airbags bei seiner Entfaltung geführt werden. Vorzugsweise weist das Führungssystem an jeder A-Säule eine Führungsschiene auf, auf der bei Entfaltung des Airbags ein mit dem Airbag verbundenes Führungsteil verschiebbar ist.

Der mindestens eine Gasgenerator ist an die im entfalteten Zustand unterhalb der Motorhaube liegenden Abschnitte bzw. Kammern des Airbags direkt oder mittelbar über Zuleitungen angeschlossen. Dadurch wird erreicht, daß zuerst der Bereich des Airbags unterhalb der Motorhaube befüllt wird und anschließend das Airbagvolumen für die angrenzenden Bereiche.

Zur Energieabsorption mittels des Airbags weist dieser mindestens eine Abströmöffnung auf. Bei einem Airbag ohne Abströmöffnung ist dieser zur Energieabsorption mittels des Airbags durch Abnäher bzw. Trennwände in Kammern unterteilt. Die Kammern sind so miteinander verbunden, daß eine Volumenverschiebung zwischen diesen gegen einen bestimmten Widerstand stattfinden kann, d.h. die Energieabsorption erfolgt durch die Volumenverschiebungsarbeit zwischen den Kammern.

Die Erfindung soll in Ausführungsbeispielen anhand von Zeichnungen erläutert werden. Es zeigen:
- Fig. 1A: einen Ausschnitt der Vorderansicht eines Kraftfahrzeuges mit entfaltetem Airbag und einer ersten Ausführungsform für die zusätzliche Fixierung der seitlichen Enden des entfalteten Airbags;
- Figuren 1B, 2A, 2B: den Ausschnitt nach Fig. 1A mit drei weiteren Ausführungsformen der Fixierung der seitlichen Enden des entfalteten Airbags;
- Fig. 3: eine Ausführungsform mit stabilisierenden Abnähern im Gewebe des Airbags;
- Fig. 4: eine Ausführungsform des Airbags mit durchsichtigen Gewebeeinlagen;
- Fig. 5: eine Ausführungsform mit einem Führungssystem für die seitlichen Enden des Airbags.
- Fig. 6: einen Airbag im entfalteten Zustand, der unterhalb der Motorhaube getrennte Kammern aufweist;

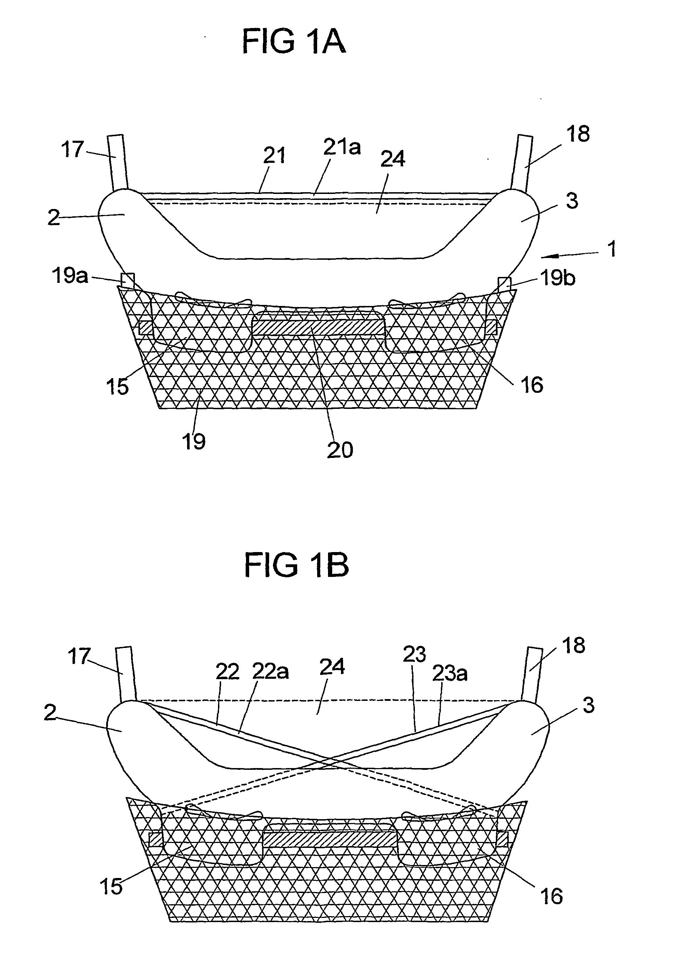

Aus den Figuren 1A, 1B, 2A, 2B, 4 und 5 ist die Anordnung des Airbags 1 im Frontbereich eines Kraftfahrzeuges erkennbar. Die Figuren zeigen die A-Säulen 17, 18 sowie die Motorhaube 19. Es ist ein Airbag in einer Ausführungsform mit Kammern 15, 16 dargestellt, die in der dargestellten entfalteten Lage unterhalb der Motorhaube 19 im Bereich von Scharnieren 19a, 19b liegen. Dem Airbag ist ein unterhalb der Motorhaube 19 angeordnetes Modulgehäuse 20 mit mindestens einem nicht dargestellten Gasgenerator zugeordnet. Eine zusätzliche Fixierung der seitlichen Enden 2,3 des Airbags erfolgt bei der Ausführungsform der Fig. 1A durch ein Fangband 21, das sich zwischen den Enden 2, 3 erstreckt. Dadurch wird das seitliche Ausweichen der Enden auch bei einem seitlichen Aufprall einer Person weitestgehend verhindert. Da ein Fangband schmal ist, wird die Sicht des Fahrers kaum behindert. Der gleiche Effekt wird erreicht, wenn anstelle des Fangbandes ein schlauchförmiger Airbag 21a vorgesehen ist, dessen Durchmesser zumindest etwa der Breite des Fangbandes 21 entspricht.

Bei der Ausführungsform der Fig. 1B sind zwei Fangbänder 22, 23 oder entsprechende schlauchförmige Airbags 22a, 23a vorgesehen, die über Kreuz verlaufen. Dabei ist ein Ende des Fangbandes 22 mit dem seitlichen Ende 2 verbunden, während das andere Ende im Bereich der Kammer 16 mit dem gegenüberliegenden Airbagabschnitt verbunden ist. Das Fangband 23 ist mit einem Ende am seitlichen Ende 3 des Airbags und mit dem anderen Ende im Bereich der Kammer 15 mit dem gegenüberliegenden Airbagabschnitt verbunden.

Bei beiden Ausführungsformen könnten anstelle der Fangbänder bzw. schlauchförmigen Airbags geringen Durchmessers durchsichtige Airbags 24 zur Stabilisierung der seitlichen Enden 2, 3 vorgesehen sein, deren Oberkante in den Figuren 1A und 1B jeweils durch eine gestrichelte Linie angedeutet ist. Diese durchsichtigen Airbags behindern die Sicht des Fahrers nur minimal.

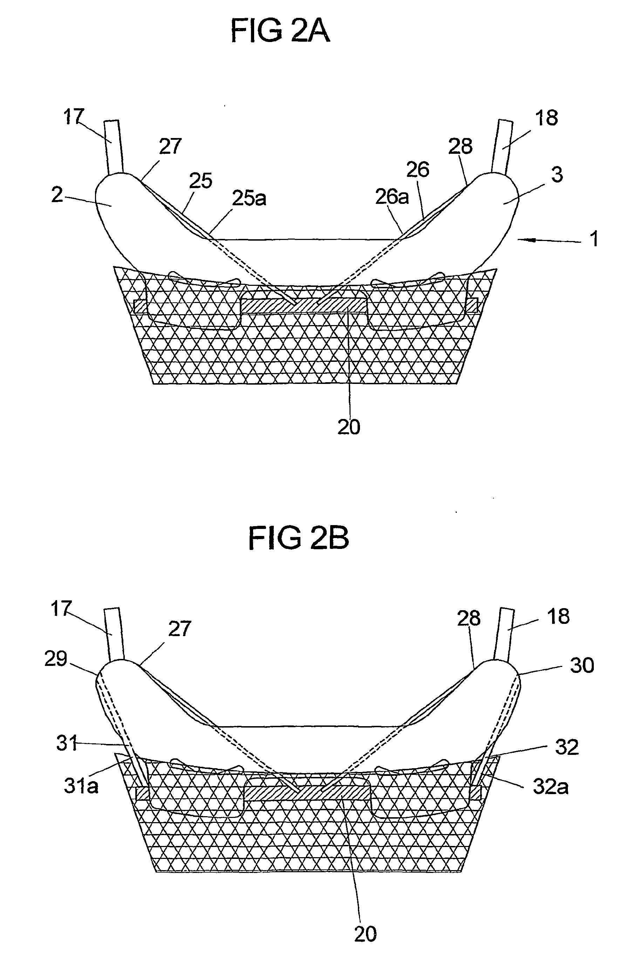

Bei der Ausführungsform der Fig. 2A verlaufen Fangbänder 25, 26 bzw. schlauchförmige Airbags 25a, 26a von den Innenseiten 27, 28 der seitlichen Enden 2, 3 des Airbags 1 zum mittleren Bereich des Modulgehäuses 20 und sind dort mit diesem verbunden. In einer weiteren Ausführungsform verlaufen zusätzlich, wie in der Fig. 2B dargestellt, auch von den Außenseiten 29, 30 der seitlichen Enden 2, 3 Fangbänder 31, 32 bzw. schlauchförmige Airbags 31a, 32a zu den Randbereichen des Modulgehäuses 20 und sind dort mit diesem verbunden.

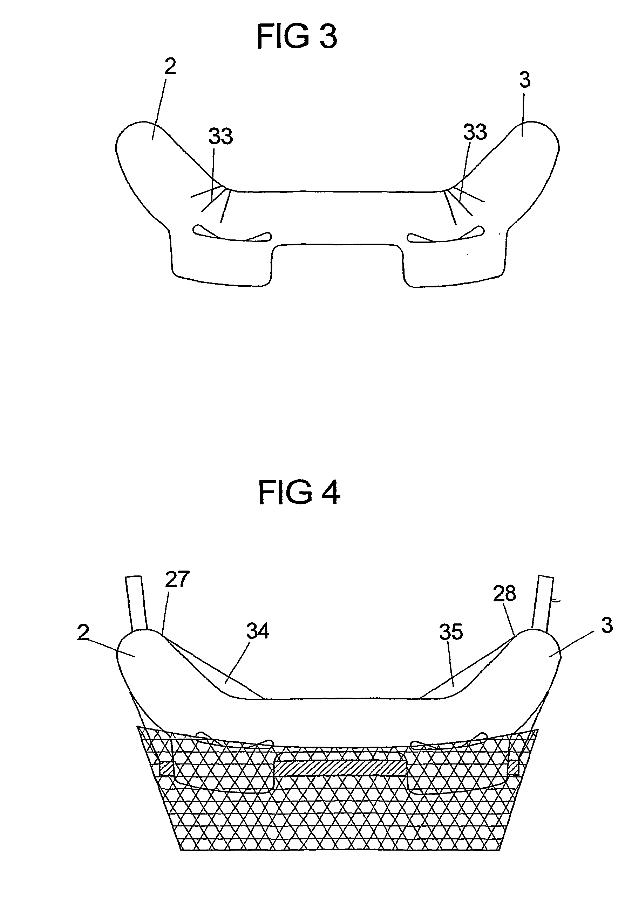

Bei der Ausführungsform der Fig. 3 sind Abnäher 33 zur Stabilisierung der seitlichen Enden 2, 3 vorgesehen.

Bei der Ausführungsform der Fig. 4 sind die seitlichen Enden 2, 3 mittels durchsichtiger Gewebeeinlagen 34, 35 stabilisiert, die sich von den Innenseiten 27, 28 der seitlichen Enden 2, 3 des Airbags schräg nach unten erstrecken und dort im mittleren Abschnitt des Airbags mit diesem verbunden sind.

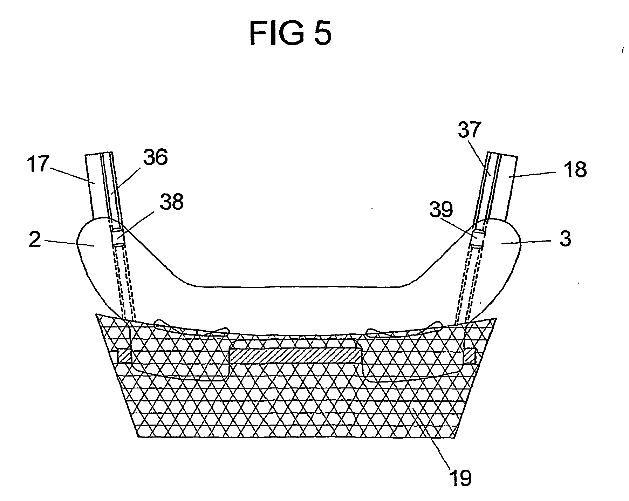

In der Fig. 5 ist eine Ausführungsform dargestellt, bei der die seitlichen Enden 2, 3 mit einem Führungssystem verbunden sind. Dieses weist im Bereich der A-Säulen Führungsschienen 36, 37 auf, die sich bis unter die Motorhaube 19 erstrecken. Diesen Führungsschienen sind Führungsteile 38, 39 zugeordnet, die an der Rückseite der seitlichen Enden 2, 3 mit diesen verbunden sind. Diese Führungsteile umgreifen die Führungsschienen, so daß sie sich nicht von diesen lösen und nur in deren Längsrichtung bewegen können. Bei der Entfaltung des Airbags gleiten die Führungsteile 38, 39 auf den Führungsschienen 36, 37 von unten nach oben, bis sie die Endstellung erreicht haben, die in Fig. 5 dargestellt ist.

Bei allen dargestellten Ausführungsformen ist infolge der U-Form des entfalteten Airbags nur der untere Bereich der Windschutzscheibe vom Airbag 1 bedeckt. Andererseits ist aber der Bereich der A-Säulen durch den Airbag stabil abgedeckt, so daß auch bei einem Schrägaufprall einer Person eine Verschiebung der betreffenden Airbagabschnitte weitestgehend verhindert wird.

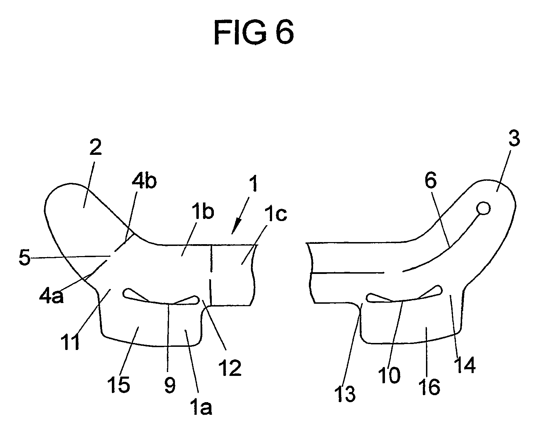

Bei der Ausführungsform der Fig. 6 sind zwei im Bereich der Scharniere 19a, 19b der Motorhaube 19 angeordnete Kammern 15, 16 vorhanden.

Zur Verbesserung des Energieabbaus beim Aufprall eines Fußgängers oder Radfahrers sind in dieser Figur zwei Möglichkeiten dargestellt. So ist das seitliche Ende 2 durch Abnäher 4a, b vom übrigen Bereich getrennt, die nur eine kleine Öffnung 5 für den Eintritt der Gase in das seitliche Ende freiläßt, so daß eine gesonderte Kammer gebildet wird. Diese Öffnung erlaubt wegen des hohen Druckes der Gase zwar eine schnelle Entfaltung des Airbags. Beim Aufprall einer Person wird jedoch ein Volumenausgleich zum übrigen Airbagbereich verzögert, d.h., bedingt durch die Unterteilung des Gassacks in Kammern und entsprechend dimensionierte Überströmbereiche, wird der Verschiebung des Gasvolumens aus dem Aufprallbereich ein Widerstand entgegengesetzt. Der obere Teil 1b weist in dieser Ausführungsform eine weitere Kammer 1c auf, die ebenfalls der Verbesserung des Energieabbaus im Aufprallbereich dient.

Beim seitlichen Ende 3 wird die Verbesserung des Energieabbaus durch einen in dessen Mitte verlaufenden Abnäher 6 erzielt.

Zwischen den nach der Entfaltung des Airbags unterhalb der Motorhaube verbleibenden Kammern 15, 16 des Airbags und dem Teil 1b des Airbags sind Abnäher 9, 10 vorgesehen, die nur kleine Öffnungen 11 bis 14 zwischen den Teilen 1a und 1b freilassen. Dadurch wird erreicht, daß sich zunächst die Kammern 15, 16 entfalten, die den hinteren Bereich der hier nicht dargestellten Motorhaube anheben, so daß sich anschließend der Teil 1b oberhalb der Motorhaube vor dem unteren Bereich der Windschutzscheibe und den A-Säulen entfalten kann.

## Patentansprüche

1. Sicherheitseinrichtung an einem Kraftfahrzeug zum Schutz von Fußgängern und Radfahrern, mit mindestens einem unter der Motorhaube (19) angeordneten und mit mindestens einem Gasgenerator verbundenen Airbag (1), der sich zum Schutz eines aufprallenden Fußgängers oder Radfahrers auf das Fahrzeug entfaltet und dabei zunächst die Motorhaube (19) zumindest am Ort der Entfaltung des Airbags (1) vom Kraftfahrzeug soweit abhebt, daß sich der Airbag (1) in einer zweiten Phase nach außen entfalten kann, wobei sich der Airbag (1) im entfalteten Zustand oberhalb der Motorhaube (19) über die gesamte Breite des Kraftfahrzeuges vor dem unteren Bereich der Windschutzscheibe und den A-Säulen (17, 18) des Kraftfahrzeugs erstreckt und sich die seitlichen, insbesondere die A-Säulen (17, 18) abdeckenden Enden (2, 3) des Airbags (1) nach dessen Entfaltung nach oben weisen und zur Verhinderung der seitlichen Verschiebung der vor den A-Säulen des Kfz entfalteten Airbagabschnitte diese zusätzlich fixiert sind,
**dadurch gekennzeichnet,**
**daß** der Airbag (1) im entfalteten Zustand unterhalb der Motorhaube (19) je eine Kammer (15, 16) im Bereich der Scharniere (19a, 19b) der Motorhaube (19) aufweist.

2. Sicherheitseinrichtung nach Anspruch 1, **dadurch gekennzeichnet, daß** als Mittel zur Fixierung der seitlichen Enden (2, 3) des Airbags mindestens ein Fangband (21, 22, 23, 25, 26, 31, 32) vorgesehen ist.

3. Sicherheitseinrichtung nach Anspruch 1 oder 2, **dadurch gekennzeichnet, daß** als Mittel zur Fixierung der seitlichen Enden (2, 3) des Airbags mindestens ein schlauchförmiger Airbag (21a, 22a, 23a, 25a, 26a, 31a, 32a) vorgesehen ist.

4. Sicherheitseinrichtung nach Anspruch 2 oder 3, **dadurch gekennzeichnet, daß** die seitlichen Enden (2, 3) des Airbags durch ein Fangband (21) oder einen schlauchartigen Airbag (21a) miteinander verbunden sind.

5. Sicherheitseinrichtung nach mindestens einem der Ansprüche 2 bis 4, **dadurch gekennzeichnet, daß** die seitlichen Enden (2, 3) des Airbags durch über Kreuz verlaufende Fangbänder (22, 23) oder schlauchartige Airbags (22a, 23a) mit dem unteren Bereich des auf der gegenüberliegenden Fahrzeugseite liegenden Airbagabschnitts verbunden sind.

6. Sicherheitseinrichtung nach mindestens einem der Ansprüche 2 bis 5, **dadurch gekennzeichnet, daß** die seitlichen Enden (2, 3) des Airbags durch Fangbänder (25, 26) oder schlauchartige Airbags (25a, 26a, 26b) fixiert sind, die mit ihrem anderen Ende am Kraftfahrzeug befestigt sind.

7. Sicherheitseinrichtung nach Anspruch 6, **dadurch gekennzeichnet, daß** die Fangbänder (25, 26) oder schlauchartigen Airbags (25a, 26a) mit dem mittleren Abschnitt eines unter der Motorhaube (19) angeordneten Modulgehäuses (20) verbunden sind.

8. Sicherheitseinrichtung nach mindestens einem der Ansprüche 2 bis 7, **dadurch gekennzeichnet, daß** jedes seitliche Ende (2, 3) des Airbags durch zwei Fangbänder (25, 31 bzw. 26, 32) oder zwei schlauchartige Airbags (25a, 31a bzw. 26a, 32a) fixiert ist, die von der Außenseite (29, 30) und der Innenseite (27, 28) des jeweiligen seitlichen Endes (2, 3) ausgehen.

9. Sicherheitseinrichtung nach mindestens einem der vorhergehenden Ansprüche, **dadurch gekennzeichnet, daß** im Bereich der seitlichen Enden (2, 3) Verstärkungen (24, 33) des Airbags vorgesehen sind.

10. Sicherheitseinrichtung nach Anspruch 9, **dadurch gekennzeichnet, daß** als Verstärkung mindestens eine Naht(33) vorgesehen ist.

11. Sicherheitseinrichtung nach Anspruch 9 oder 10, **dadurch gekennzeichnet, daß** als Verstärkung mindestens eine transparenter Airbag (24) vorgesehen ist.

12. Sicherheitseinrichtung nach Anspruch 11, **dadurch gekennzeichnet, daß** mindestens ein transparenter Airbag (24) zwischen den seitlichen Enden (2, 3) angeordnet ist.

13. Sicherheitseinrichtung nach Anspruch 11, **dadurch gekennzeichnet, daß** von jedem seitlichen Ende (2, 3) mindestens eine durchsichtige Gewebeeinlage (34, 35) in den mittleren Bereich des Airbags verläuft.

14. Sicherheitseinrichtung nach mindestens einem der vorhergehenden Ansprüche, **dadurch gekennzeichnet, daß** im Bereich der A-Säulen (17, 18) ein für die Führung der seitlichen Enden des Airbags bei seiner Entfaltung mit diesem verbundenes Führungssystem (36 - 39) vorgesehen ist.

15. Sicherheitseinrichtung nach Anspruch 14, **dadurch gekennzeichnet, daß** das Führungssystem an jeder A-Säule (17, 18) eine Führungsschiene (36, 37) aufweist, auf der bei Entfaltung des Airbags ein mit dem Airbag verbundenes Führungsteil (38, 39) verschiebbar ist.

16. Sicherheitseinrichtung nach mindestens einem der vorhergehenden Ansprüche, **dadurch gekennzeichnet, daß** die im entfalteten Zustand unterhalb der Motorhaube (19) liegenden Kammern (15, 16) direkt oder mittelbar über Zuleitungen an einen Gasgenerator angeschlossen sind.

17. Sicherheitseinrichtung nach mindestens einem der vorhergehenden Ansprüche, **dadurch gekennzeichnet, daß** zur Energieabsorption mittels des Airbags dieser mindestens eine Abströmöffnung aufweist.

18. Sicherheitseinrichtung nach mindestens einem der Ansprüche 1 bis 16, **dadurch gekennzeichnet, daß** der Airbag durch Abnäher und/oder Trennwände (4a, 4b , 6, 9, 10) in Kammern (1c, 2, 15, 16) unterteilt ist.

19. Sicherheitseinrichtung nach Anspruch 18, **dadurch gekennzeichnet, daß** zur Energieabsorption mittels des Airbags die Kammern so miteinander verbunden sind, daß eine Volumenverschiebung zwischen diesen stattfinden kann.

## Claims

1. Motor vehicle safety device for protecting pedestrians and cyclists, having at least one airbag (1) which is arranged under the engine hood (19), is connected to at least one gas generator, unfolds onto the vehicle to protect an impinging pedestrian or cyclist and, in the process, initially lifts up the engine hood (19) from the motor vehicle, at least at the location of the unfolding of the airbag (1), to such an extent that the airbag (1) can unfold outwardly in a second phase, wherein in the unfolded state, the airbag (1) extends above the engine hood (19) over the entire width of the motor vehicle in front of the lower region of the windshield and the A pillars (17, 18) of the motor vehicle, and the lateral ends (2, 3) of the airbag (1) which, in particular, cover the A pillars (17, 18) point upward after the unfolding of said airbag, and the airbag sections which are unfolded in front of the A pillars of the motor vehicle are additionally fixed in order to prevent the lateral displacement of said airbag sections, **characterized in that**, in the unfolded state, the airbag (1) has in each case a chamber (15, 16) below the engine hood (19) in the region of the hinges (19a, 19b) of the engine hood (19).

2. Safety device according to claim 1, **characterized in that** at least one intercepting strap (21, 22, 23, 25, 26, 31, 32) is provided as a means for fixing the lateral ends (2, 3) of the airbag.

3. Safety device according to Claim 1 or 2, **characterized in that** at least one tube-shaped airbag (21a, 22a, 23a, 25a, 26a, 31a, 32a) is provided as a means for fixing the lateral ends (2, 3) of the airbag.

4. Safety device according to Claim 2 or 3, **characterized in that** the lateral ends (2, 3) of the airbag are connected to one another by an intercepting strap (21) or a tube-like airbag (21a).

5. Safety device according to at least one of Claims 2 to 4, **characterized in that** the lateral ends (2, 3) of the airbag are connected to the lower region of the airbag section which lies on the opposite vehicle side via crosswise extending intercepting straps (22, 23) or tube-like airbags (22a, 23a).

6. Safety device according to at least one of Claims 2 to 5, **characterized in that** the lateral ends (2, 3) of the airbag are fixed by intercepting straps (25, 26) or tube-like airbags (25a, 26a, 26b), the other ends of which are fastened to the motor vehicle.

7. Safety device according to Claim 6, **characterized in that** the intercepting straps (25, 26) or tube-like airbags (25a, 26a) are connected to the central section of a module housing (20) which is arranged below the engine hood (19).

8. Safety device according to at least one of Claims 2 to 7, **characterized in that** each lateral end (2, 3) of the airbag is fixed by two intercepting straps (25, 31 and 26, 32, respectively) or two tube-like airbags (25a, 31a and 26a, 32a, respectively) which emerge from the outer side (29, 30) and the inner side (27, 28) of the respective lateral end (2, 3).

9. Safety device according to at least one of the preceding claims, **characterized in that** reinforcements (24, 33) of the airbag are provided in the region of the lateral ends (2, 3) .

10. Safety device according to Claim 9, **characterized in that** at least one seam (33) is provided as reinforcement.

11. Safety device according to Claim 9 or 10, **characterized in that** at least one transparent airbag (24) is provided as reinforcement.

12. Safety device according to Claim 11, **characterized in that** at least one transparent airbag (24) is arranged between the lateral ends (2, 3).

13. Safety device according to Claim 11, **characterized in that** at least one transparent woven fabric insert (34, 35) extends from each lateral end (2, 3) into the central region of the airbag.

14. Safety device according to at least one of the preceding claims, **characterized in that** a guide system (36 - 39) for guiding the lateral ends of the airbag during its unfolding, which guide system (36 - 39) is connected to said airbag, is provided in the region of the A pillars (17, 18).

15. Safety device according to Claim 14, **characterized in that** the guide system has a guide rail (36, 37) on each A pillar (17, 18), on which guide rail (36, 37) a guide part (38, 39) which is connected to the airbag can be displaced during the unfolding of the airbag.

16. Safety device according to at least one of the preceding claims, **characterized in that** the chambers (15, 16) which lie below the engine hood (19) in the unfolded state are connected to a gas generator directly or indirectly via feed lines.

17. Safety device according to at least one of the preceding claims, **characterized in that** the airbag has at least one outflow opening for energy absorption by means of said airbag.

18. Safety device according to at least one of Claims 1 to 16, **characterized in that** the airbag is subdivided into chambers (1c, 2, 15, 16) by tucks and/or dividing walls (4a, 4b, 6, 9, 10).

19. Safety device according to Claim 18, **characterized in that**, for energy absorption by means of the airbag, the chambers are connected to one another in such a way that a volume can be displaced between them.

## Revendications

1. Dispositif de sécurité sur un véhicule automobile, pour la protection de piétons et de cyclistes, comportant au moins un airbag (1) agencé au-dessous du capot de moteur (19) et relié à au moins un générateur de gaz, lequel airbag se déploie sur le véhicule pour protéger un piéton ou un cycliste heurtant celui-ci et soulève tout d'abord le capot de moteur (19) au moins à l'emplacement du déploiement de l'airbag (1) du véhicule automobile, jusqu'à ce que l'airbag (1) puisse se déployer dans une deuxième phase vers l'extérieur, l'airbag s'étendant à l'état déployé au-dessus du capot de moteur (19), sur toute la largeur du véhicule automobile devant la région inférieure du pare-brise et des montants A (17, 18) du véhicule automobile, et les extrémités latérales (2, 3) de l'airbag (1), qui recouvrent en particulier les montants A (17, 18), sont tournées vers le haut après son déploiement et, pour empêcher le déplacement latéral des tronçons d'airbag déployés devant les montants A du véhicule automobile, ceux-ci sont additionnellement fixés,
**caractérisé en ce que**
à l'état déployé, l'airbag (1) présente au-dessous du capot de moteur (19) une chambre (15, 16) respective dans la région des charnières (19a, 19b) du capot de moteur (19).

2. Dispositif de sécurité selon la revendication 1, **caractérisé en ce qu'**il est prévu au moins une bande de garde (21, 22, 23, 25, 26, 31, 32) en tant que moyen de fixation des extrémités latérales (2, 3) de l'airbag.

3. Dispositif de sécurité selon la revendication 1 ou 2, **caractérisé en ce qu'**il est prévu au moins un airbag (21a, 22a, 23a, 25a, 26a, 31a, 32a) de forme tubulaire en tant que moyen de fixation des extrémités latérales (2, 3) de l'airbag.

4. Dispositif de sécurité selon la revendication 2 ou 3, **caractérisé en ce que** les extrémités latérales (2, 3) de l'airbag sont reliées l'une à l'autre par une bande de garde (21) ou par un airbag tubulaire (21a).

5. Dispositif de sécurité selon l'une au moins des revendications 2 à 4, **caractérisé en ce que** les extrémités latérales (2, 3) de l'airbag sont reliées par des bandes de garde (22, 23) s'étendant en croix ou des airbags tubulaires (22a, 23a) s'étendant en croix avec la région inférieure du tronçon d'airbag situé sur le côté opposé du véhicule.

6. Dispositif de sécurité selon au moins l'une des revendications 2 à 5, **caractérisé en ce que** les extrémités latérales (2, 3) de l'airbag sont fixées par des bandes de garde (25, 26) ou par des airbags tubulaires (25a, 26a, 26b) qui sont fixés au véhicule automobile avec leur autre extrémité.

7. Dispositif de sécurité selon la revendication 6, **caractérisé en ce que** les bandes de garde (25, 26) ou les airbags tubulaires (25a, 26a) sont reliés au tronçon médian d'un boîtier de module (20) agencé sous le capot de moteur (19).

8. Dispositif de sécurité selon au moins l'une des revendications 2 à 7, **caractérisé en ce que** chaque extrémité latérale (2, 3) de l'airbag est fixée par deux bandes de garde (25, 31 ou 26, 32) ou par deux airbags tubulaires (25a, 31a ou 26a, 32a) qui partent de la face extérieure (29, 30) et de la face intérieure (27, 28) de l'extrémité latérale (2, 3) respective.

9. Dispositif de sécurité selon au moins l'une des revendications précédentes, **caractérisé en ce que** dans la région des extrémités latérales (2, 3) sont prévus des renforcements (24, 33) de l'airbag.

10. Dispositif de sécurité selon la revendication 9, **caractérisé en ce qu'**il est prévu au moins une couture (33) en tant que renforcement.

11. Dispositif de sécurité selon la revendication 9 ou 10, **caractérisé en ce qu'**il est prévu au moins un airbag (24) transparent à titre de renforcement.

12. Dispositif de sécurité selon la revendication 11, **caractérisé en ce qu'**au moins un airbag (24) transparent est agencé entre les extrémités latérales (2, 3).

13. Dispositif de sécurité selon la revendication 11, **caractérisé en ce que** depuis chaque extrémité latérale (2, 3) s'étend au moins un insert textile (34, 35) translucide dans la région médiane de l'airbag.

14. Dispositif de sécurité selon au moins l'une des revendications précédentes, **caractérisé en ce que** dans la région des montants A (17, 18) est prévu un système de guidage (36 à 39) relié à l'airbag pour le guidage des extrémités latérales de celui-ci lors de son déploiement.

15. Dispositif de sécurité selon la revendication 14, **caractérisé en ce que** le système de guidage présente à chaque montant A (17, 18) un rail de guidage (36, 37) sur lequel peut être déplacée une partie de guidage (38, 39) qui est reliée à l'airbag lors du déploiement de l'airbag.

16. Dispositif de sécurité selon au moins l'une des revendications précédentes, **caractérisé en ce que** les chambres (15, 16) situées au-dessous du capot de moteur (19) à l'état déployé sont raccordées directement ou indirectement à un générateur de gaz via des conduites d'amenée.

17. Dispositif de sécurité selon au moins l'une des revendications précédentes, **caractérisé en ce que** l'airbag présente au moins un orifice d'écoulement pour l'absorption d'énergie au moyen de l'airbag.

18. Dispositif de sécurité selon au moins l'une des revendications 1 à 16, **caractérisé en ce que** l'airbag est subdivisé en chambres (1c, 2, 15, 16) par des pinces de couture et/ou par des cloisons de séparation (4a, 4b, 6, 9, 10).

19. Dispositif de sécurité selon la revendication 18, **caractérisé en ce que** pour l'absorption d'énergie au moyen de l'airbag, les chambres sont reliées les unes aux autres de telle sorte qu'il peut se produire un déplacement de volume entre celles-ci.
